(19) **Europäisches Patentamt**
**European Patent Office**
**Office européen des brevets**

(11) **EP 1 684 395 B1**

(12) **FASCICULE DE BREVET EUROPEEN**

(45) Date de publication et mention
de la délivrance du brevet:
**22.04.2015 Bulletin 2015/17**

(51) Int Cl.:
*H02H 9/08* (2006.01)

(21) Numéro de dépôt: **05291911.5**

(22) Date de dépôt: **15.09.2005**

(54) **Poste de transformation électrique moyenne tension / basse tension**

Mittelspannung/Niederspannung - Transformatorenstation

Medium/low voltage transformer station

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **19.01.2005 FR 0550158
16.03.2005 EP 05290581**

(43) Date de publication de la demande:
**26.07.2006 Bulletin 2006/30**

(73) Titulaire: **TRANSFIX
83130 La Garde (FR)**

(72) Inventeurs:
• **Faltermeier, Jean-Francis
83210 Sollies-Toucas (FR)**
• **Trifigny, Philippe
83210 La Farlede (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
**EP-A1- 0 595 677**

• **GUNILLA BRÄNNMAN: 'Analysmodell för
impedansjordat system med lokal kompensering
Avdelningen för elektroteknik vid Institutionen
för teknik Gunilla Brännman EXAMENSARBETE
Analysmodell för impedansjordat system med
lokal kompensering', [en ligne] 21 Octobre 2003,
pages 1 - 52, XP055112570 Extrait de l'Internet:
<URL:http://www.diva-portal.org/smash/get/d
iva2:214924/FULLTEXT01.pdf> [extrait le
2014-04-07]**

**Description**

La présente invention concerne un poste de transformation électrique moyenne tension / basse tension (MT/BT).

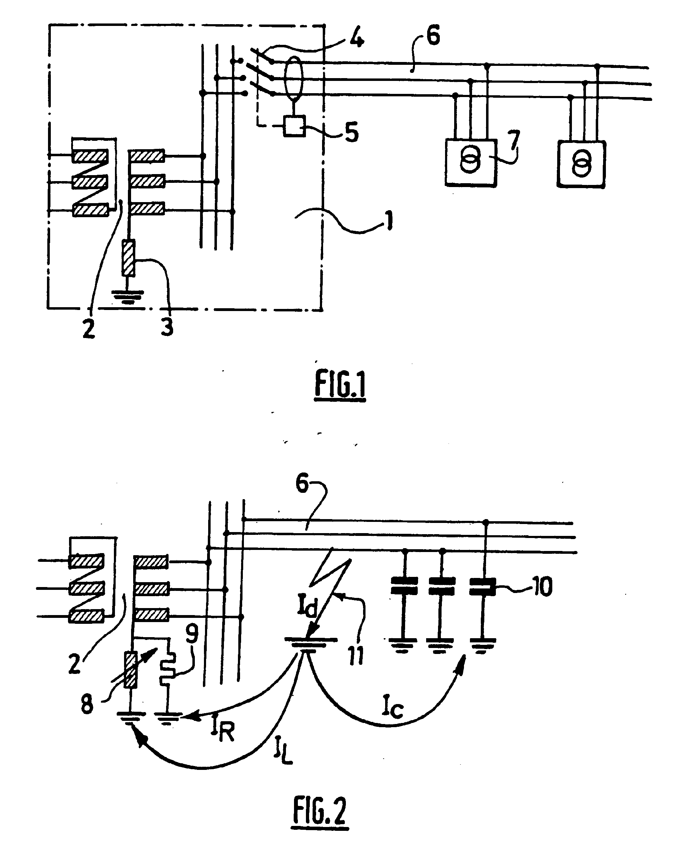

Comme le montre la figure 1, un réseau de distribution électrique moyenne tension triphasé tel qu'on en trouve dans la plupart des pays d'Europe, est généralement constitué des éléments suivants :

- un poste source 1 qui alimente le réseau, dans lequel se trouvent un transformateur haute tension / moyenne tension 2, une impédance de point neutre 3, et différents départs de ligne 4, équipés de moyens de protection contre les courts-circuits, dont des protections homopolaires 5 qui interviennent plus particulièrement en cas de défaut entre une phase de la ligne 6 et la terre,

- différentes lignes MT 6, pouvant être soit de type aérien en conducteur nu, soit de type souterrain ou aérien en conducteur isolé avec écran de terre,

- des postes de transformation moyenne tension / basse tension 7, destinés à fournir les besoins en électricité des clients desservis par le réseau.

Par le passé, les lignes MT 6 étaient essentiellement aériennes et constituées de conducteurs nus. De telles lignes sont exposées aux contraintes climatiques (tempêtes, orages, ...). Pour rendre les réseaux moins vulnérables et donc améliorer la qualité de service, les distributeurs d'électricité ont remplacé partiellement, voire intégralement, ces lignes aériennes par des lignes souterraines constituées de câble MT avec écran périphérique mis à la terre. Par contre, si la fiabilité des réseaux s'en est trouvée fortement améliorée, il est apparu que l'effet capacitif de ces câbles pouvait être néfaste à la protection des personnes et des biens, du fait d'une forte augmentation du courant de défaut en cas de court-circuit entre une phase du réseau et la terre. Pour pallier cet inconvénient, les distributeurs d'électricité ont inséré une inductance entre le neutre du réseau MT et la terre, de manière à compenser le courant capacitif apparaissant lors des défauts entre phase et terre.

Comme le montre la figure 2, cette inductance 8 est située dans le poste source haute tension / moyenne tension, typiquement connectée au point neutre de l'enroulement secondaire du transformateur haute tension / moyenne tension 2. En parallèle de cette inductance 8 est également connectée une résistance 9 destinée à permettre la détection des défauts entre phase et terre. Sur cette même figure, l'effet capacitif des câbles vis-à-vis de la terre est symbolisé par les condensateurs 10 de valeur C. En cas d'un défaut 11 entre une phase et la terre, un courant capacitif Ic va circuler dans le défaut. Ce courant peut atteindre des valeurs de l'ordre de la centaine d'ampères et engendrer des tensions de toucher ou des tensions de pas dangereuses selon la qualité des prises de terre au lieu du défaut. Dans la mesure où la valeur L de l'inductance de compensation 8 est telle que l'égalité suivante est respectée,

$$3LC\omega^2 = 1 \quad \text{où} \quad \omega = 2\pi f$$

$f$ étant la fréquence du réseau, les courants IC et IL vont s'annuler et le courant de défaut phase terre Id ne comprend plus que le courant IR, d'une valeur généralement inférieure ou égale à 10 A, en fait essentiellement dépendant de la valeur de la résistance 9 et choisi de valeur juste suffisante pour permettre le fonctionnement des protections homopolaires du poste source. L'effet capacitif des câbles est ainsi supprimé et la valeur du courant de défaut Id est maîtrisée par l'exploitant.

De manière à respecter l'égalité précédente, quelle que soit la configuration du réseau qui peut changer selon les contraintes d'exploitation ou suite à des extensions, l'inductance 8 est généralement réglable et accordée en permanence à la valeur effective du courant capacitif homopolaire du réseau grâce à un dispositif automatique.

Toutefois, de telles inductances, appelées également bobines de Petersen, sont des dispositifs particulièrement onéreux et dont la plage de réglage peut rapidement s'avérer insuffisante en cas d'extension du réseau. Il s'en suit que le distributeur d'énergie, voulant poursuivre une opération de fiabilisation de son réseau par enterrement progressif des lignes, ou voulant étendre son réseau pour assurer l'alimentation de nouveaux clients, est confronté à des contraintes économiques supplémentaires du fait de la nécessité d'intervenir au niveau du poste source et de remplacer la bobine de Petersen existante.

Par ailleurs, il a été mentionné précédemment que le courant IR dépendait essentiellement de la résistance 9. Or l'expérience montre que, selon la nature et la longueur des câbles utilisés pour étendre et fiabiliser la ligne 6, ce courant IR, qui est sensiblement le courant de défaut Id, se trouve majoré du fait de la résistance des circuits empruntés par les courants IL, IR et IC provoqués par le défaut, et peut ne plus être maîtrisable dans le cas de réseaux exceptionnellement étendus.

L'article de Gunilla Brânnman "Analysemodell för impedansjordat system med lokal kompensering" publié le 21 octobre 2003 décrit un modèle analytique pour un système avec une impédance à la terre équipé d'équilibrage locale.

L'objet de la présente invention est d'éviter ces inconvénients et de permettre des extensions de réseau ou l'enterrement progressif des lignes du réseau sans devoir intervenir dans le poste source, ou tout au moins en minimisant les modifications à y apporter. Il concerne un poste de transformation moyenne tension / basse tension (ou encore MT/BT), dans lequel est intégré un moyen de compensation du courant homopolaire généré par la portion de réseau à laquelle est raccordé le poste.

Plus particulièrement, l'invention a pour objet un poste de transformation électrique MT/BT, comprenant un transformateur MT/BT, ledit poste comprenant un moyen de compensation du courant capacitif homopolaire généré par une portion de réseau MT de longueur forfaitaire auquel ledit transformateur est susceptible d'être connecté, en cas d'un défaut entre une phase et la terre situé sur ce réseau, les enroulements primaires du transformateur étant couplés en étoile et le circuit magnétique du transformateur comprenant au moins une jambe de retour de flux agencée pour canaliser le flux homopolaire, ladite jambe comprenant au moins un entrefer pour ajuster la reluctance du circuit suivi par le flux homopolaire.

À titre d'exemple, un réseau souterrain de tension 10 kV réalisé avec des câbles avec écran de terre génère un courant capacitif de 1,5 A / km en cas d'un défaut franc entre une phase et la terre. Le poste de transformation objet de l' inveiztion permet d'assurer de manière économique la compensation d'un courant pour des valeurs jusqu'à 15 A. Il couvre ainsi une portion de réseau de longueur égale à 10 km. La densité de l'habitat dans les pays occidentaux est telle que le nombre de postes de transformation tend à être supérieur ou égal à 1 poste MT/BT par km de réseau. En conséquence, grâce à l'objet de l'invention, il devient économique d'envisager des extensions souterraines de réseau MT, en insérant par exemple au sein de chaque groupe de 10 nouveaux postes MT/BT un poste MT/BT qui assure la compensation du courant capacitif homopolaire de la portion de réseau nécessaire à l'alimentation de ce groupe de postes. De cette manière, l'extension du réseau peut se faire en évitant d'apporter des modifications dans le poste source, ou, comme on le verra plus loin, en limitant ces modifications à un simple ajustement de la résistance de neutre.

Dans un mode de réalisation particulier, le transformateur MT/BT est un transformateur à bain d'huile.

Plus particulièrement, le moyen de compensation peut être intégré dans le bain d'huile du transformateur.

Également dans un mode de réalisation particulier, le moyen de compensation du courant homopolaire est une inductance.

Plus particulièrement, les caractéristiques de l'inductance peuvent être choisies pour, d'une part, assurer la compensation du courant homopolaire d'une portion de réseau MT sur laquelle est raccordé le poste et, d'autre part, ne pas perturber le fonctionnement des protections homopolaires situées dans le poste source qui alimente le réseau MT.

L'inductance peut être monophasée et connectée entre le point neutre constitué par les enroulements MT du transformateur et la mise à la terre du poste.

Plus particulièrement, l'inductance monophasée peut être constituée d'un solénoïde enveloppé d'un blindage magnétique.

Également dans un mode de réalisation particulier, le couplage des enroulements MT du transformateur est du type zigzag.

Un enroulement tertiaire de stabilisation de couplage triangle peut en outre être ajouté au transformateur.

Également dans un mode de réalisation particulier, le transformateur possède une cuve et comporte, sur une face latérale de ladite cuve une première armoire dans laquelle se trouvent les bornes de raccordement au réseau MT autorisant un schéma de branchement en passage d'ossature ou en antenne, et une seconde armoire comprenant un tableau de répartition BT permettant l'évacuation de l'énergie à partir de plusieurs câbles BT.

Le transformateur peut en outre intégrer un dispositif de protection associant trois fusibles MT à percuteur, un dispositif déconnecteur triphasé, et un dispositif de détection des courants de défaut entre phase et masse de la partie active du transformateur.

Plus particulièrement, la masse de la partie active de l'inductance peut être isolée de l'enveloppe du poste et reliée électriquement à la masse de la partie active du transformateur.

Le mode de réalisation qui vient d'être décrit, dans lequel les moyens de compensation comprennent une inductance réalisée au moyen d'un solénoïde et d'un blindage magnétique, présente encore certains inconvénients.

En premier lieu, l'inductance peut, selon les caractéristiques qui lui sont demandées, être volumineuse par rapport à la partie active du transformateur qui la contient, ce qui revient à majorer fortement l'encombrement de l'appareil ainsi que l'encombrement du poste dans lequel il est intégré.

Par ailleurs, le couplage du transformateur doit être tel qu'il présente des enroulements MT connectés en zigzag de manière à ne pas saturer le circuit magnétique ni créer de flux homopolaire, lequel flux provoquerait des pertes par courants de Foucault dans les parties avoisinantes du circuit magnétique et dégraderait le facteur de qualité du système.

Enfin, un enroulement de stabilisation, enroulement tertiaire connecté en triangle, est nécessaire pour éviter que les courants susceptibles d'apparaître dans le neutre de l'enroulement secondaire du transformateur ne se convertissent en courant dans le neutre de l'enroulement primaire.

Ces différents points conduisent à majorer l'encombrement et le coût de fabrication du poste MT/BT.

Aussi, dans d'autres modes de réalisation, le dispositif de compensation n'est plus constitué d'un solénoïde distinct de la partie active du transformateur, mais est directement intégré dans celle-ci.

Plus particulièrement, un enroulement de mesure constitué d'au moins une spire d'un conducteur peut être enroulé sur ladite jambe de rebouclage du circuit magnétique.

Un organe de coupure BT peut en outre être prévu en aval des enroulements BT du transformateur, cet organe de coupure étant agencé pour être déclenché par un relais à maximum de tension homopolaire intégré dans le poste et utilisant l'image de la tension homopolaire délivrée par ledit enroulement de mesure.

Dans un troisième mode de réalisation, le circuit magnétique comprend deux jambes de retour du flux homopolaire, disposées sensiblement symétriquement de part et d'autre des enroulements du transformateur.

Plus particulièrement, les jambes de retour de flux peuvent être constituées de tronçons en tôles magnétiques empilées appuyées sur les extrémités de culasses reliant les extrémités des noyaux magnétiques sur lesquels sont enroulés les enroulements primaires du transformateur.

Des entrefers peuvent être aménagés entre les différents tronçons et entre les tronçons d'extrémité et les culasses du circuit magnétique, lesdits entrefers étant agencés de manière à obtenir la reluctance du circuit adaptée à l'impédance homopolaire souhaitée.

En variante, ledit transformateur comprend un circuit magnétique principal constitué de trois noyaux dont les extrémités sont reliées par deux culasses, et deux jambes de retour de flux comportant des ailes en prolongement des culasses du circuit magnétique principal.

L'invention a également pour objet un réseau électrique à moyenne tension, comprenant au moins un poste de transformation tel que décrit ci-dessus, et au moins un poste de transformation ne comprenant pas de moyen de compensation du courant capacitif homopolaire.

On décrira maintenant, à titre d'exemple non limitatif, des modes de réalisation particuliers de l'invention, en référence aux dessins schématiques annexés dans lesquels :

- la figure 1 est un schéma électrique d'un réseau de distribution électrique moyenne tension triphasé de l'art antérieur ;

- la figure 2 illustre les courants dans le réseau de la figure 1 ;

- la figure 3 est un schéma d'un tronçon de réseau MT incluant un poste de transformation selon l'invention ;

- la figure 4 illustre les courants dans le réseau de la figure 3 ;

- la figure 5 est un schéma d'un transformateur comprenant des moyens de réalisation ;

- les figures 6 et 7 sont respectivement un schéma et une vue en perspective d'un poste de transformation selon ce mode de réalisation ;

- la figure 8 est un schéma d'un transformateur selon un mode de réalisation de l'invention ;

- la figure 9 est un schéma de ses enroulements électriques ;

- la figure 10 en illustre une variante ;

- la figure 11 illustre une utilisation de cette variante ;

- la figure 12 est un schéma d'un transformateur selon un autre mode de réalisation de l'invention ; et

- la figure 13 est un schéma du circuit magnétique d'un transformateur selon un autre mode de réalisation de l'invention.

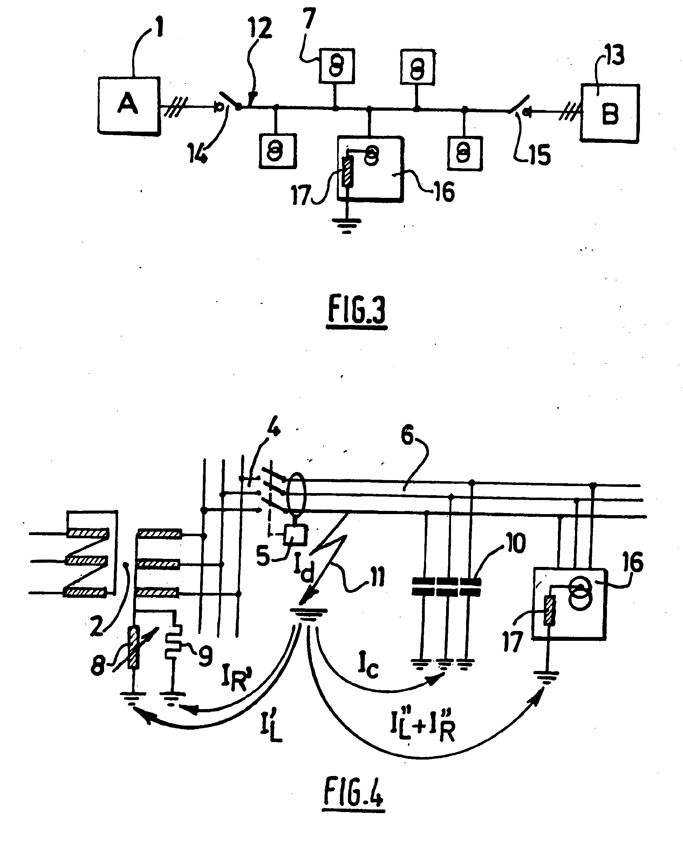

La figure 3 présente un tronçon de réseau MT 12, constituée partiellement ou intégralement d'un câble souterrain. Ce tronçon 12 est alimenté par un poste source A repéré 1 en conditions d'exploitation normale. Le courant capacitif homopolaire correspondant à ce tronçon de ligne est compensé par la bobine de Petersen située dans ce poste source A. Néanmoins, suite à une indisponibilité ou à une avarie de la ligne située entre le poste source 1 et le tronçon 12, il peut être nécessaire de changer de source d'alimentation. En ouvrant l'interrupteur 14 et en fermant l'interrupteur 15, le tronçon est réalimenté à partir du poste source B. Avec une solution antérieure à celle correspondant à la présente invention, il aurait été nécessaire de modifier l'accord des bobines de Petersen appartenant respectivement aux postes sources A et B, le courant capacitif homopolaire vu par le poste A ayant diminué, celui vu par le poste B ayant augmenté. Or, dans le cas de postes non équipés d'un système d'accord automatique, il est nécessaire de faire cette opération manuellement, ce qui peut s'avérer contraignant pour l'exploitant en cas de reconfiguration fréquente du réseau. Avec la solution correspondant à la présente invention, l'accord des bobines de Petersen n'a pas à être modifié, aucune intervention humaine n'est nécessaire.

Enfin, si la structure du réseau MT s'y prête, il est même possible de remplacer la bobine de Petersen par une inductance fixe nettement moins onéreuse qui assure une compensation forfaitaire de la partie permanente du réseau alimenté par le poste source. Seuls les tronçons susceptibles de changer de source d'alimentation sont alors équipés de postes MT/BT intégrant un dispositif de compensation spécifique. Il s'en suit pour l'exploitant une réduction d'investissement significative.

Le fait de multiplier les points de mise à la terre du neutre du réseau MT peut conduire à une perte de sensibilité de la protection homopolaire 5 qui équipe chaque départ de ligne 4 au niveau du poste source 1. Comme le montre la figure 4, une partie du courant dû au défaut et qui se refermait initialement au travers du poste source va à présent être déviée vers le dispositif de compensation 17 équipant un ou plusieurs postes de transformation MT/BT 16, et donc ne sera pas vue par la protection homopolaire 5.

Néanmoins, l'étude de cas d'application concrets montre que, quand cela s'avère nécessaire, il est facile de maintenir le niveau de sensibilité des protections en modifiant simplement la valeur de la résistance 9. Pour reprendre l'exemple précédent d'un réseau de distribution de tension 10 kV, comprenant une longueur totale de 100 km de câbles MT, impliquant que la bobine de Petersen soit réglée à une valeur sensiblement voisine de 150 A, une telle résistance est habituellement dimensionnée pour fournir un courant IR égal à 5 A en cas de défaut franc entre une phase du réseau et la terre. Dans les mêmes conditions, les dispositifs de compensation 17 intégrés dans les postes de transformation 16 fourniront chacun un courant inductif IL" de 15 A et un courant résistif IR" de l'ordre de 0,2 A, dû aux pertes ohmiques dans le dispositif. En imaginant une situation où le réseau concerné est étendu d'une longueur cumulée de 100 km de câbles, comportant environ 100 postes MT/BT dont 10 postes intégrant un dispositif de compensation 17, la sensibilité des protections sera maintenue à un niveau satisfaisant en divisant simplement par 2 la valeur de la résistance 9. Or il est facile d'effectuer une telle modification qui correspond à un investissement très limité.

Comme on le voit sur la figure 4, la compensation répartie le long du réseau MT selon l'invention présente un autre avantage, concernant tout particulièrement les réseaux très étendus : dans le cas d'un défaut se situant en extrémité de ligne, seuls les courants IL' et IR' devront retourner au point neutre situé dans le poste source, alors que les courants IL" et IR" rejoindront les postes MT/BT munis des dispositifs de compensation selon un circuit nettement raccourci. La résistance globale du circuit parcouru par ces différentes composantes inductives et résistives est donc réduite, d'où également une réduction du courant IR (IR = IR' + IR"), constituant principalement le courant dans le défaut Id.

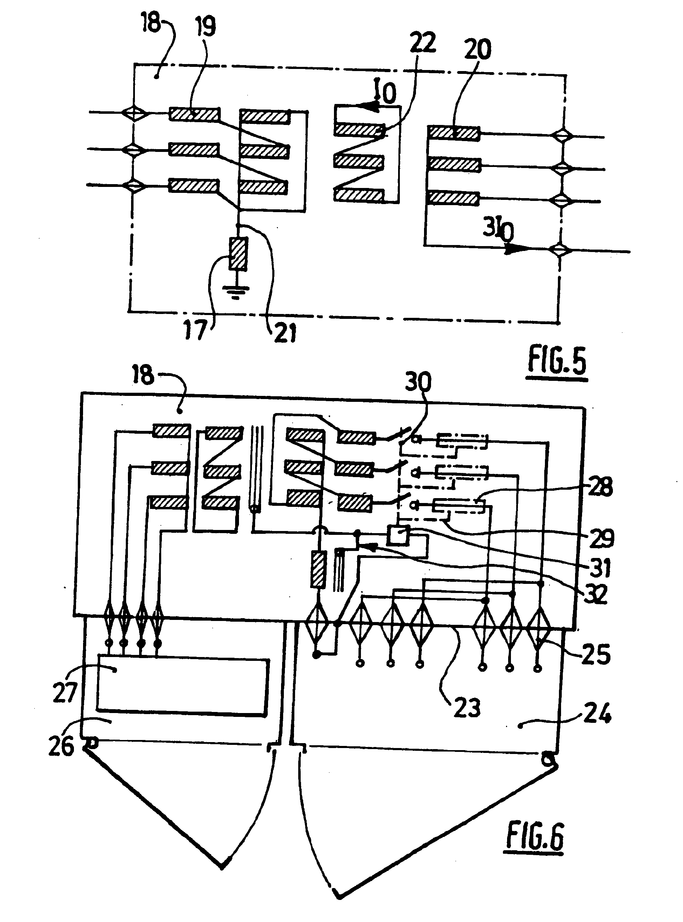

On décrira maintenant le mode de réalisation des postes de transformation MT/BT équipé d'un dispositif de compensation du courant capacitif homopolaire du réseau. Un poste de transformation comprend parmi ses composants un transformateur MT/BT, généralement à bain d'huile. La figure 5 présente le schéma électrique du transformateur équipant le poste selon un mode de réalisation. Ce transformateur 18 comporte des enroulements primaires ou MT 19 et des enroulements secondaires ou BT 20. S'agissant d'un transformateur triphasé, les enroulements des trois phases peuvent être connectés en triangle, en étoile ou en zigzag. Le couplage en zigzag est plus particulièrement intéressant ici parce qu'il offre une impédance homopolaire très faible et donc peut être utilisé pour créer un point neutre. Selon un mode de réalisation préféré, le poste de transformation objet de l'invention comportera donc un transformateur triphasé dont les enroulements primaires 19 sont connectés selon un couplage de type zigzag. On peut alors insérer entre le point neutre 21 ainsi obtenu dans le transformateur et la terre du poste une inductance monophasée 17 de caractéristiques choisies, qui compensera une certaine valeur de courant capacitif homopolaire du réseau en délivrant par exemple un courant réactif de 15 A sous pleine tension homopolaire.

Cette inductance peut être isolée dans l'huile minérale, ce qui présente l'avantage de permettre une réduction de son encombrement et également d'être insérée directement dans la cuve du transformateur. Selon un mode de réalisation préférentiel, elle est constituée d'un solénoïde réalisé à partir du bobinage d'un fil conducteur isolé.

Pour protéger l'environnement de l'inductance contre les effets du champ magnétique généré lorsque celle-ci est traversée par un courant, un blindage magnétique est disposé autour du solénoïde de façon à permettre aux lignes du champ de se refermer de manière contrôlée.

L'insertion d'une inductance entre le neutre du transformateur et la terre exige néanmoins certaines précautions, notamment quand le transformateur MT/BT du poste est susceptible d'alimenter une charge BT déséquilibrée, ce qui est généralement le cas en milieu rural ou lors de l'apparition d'un défaut d'isolement sur le réseau BT. Ce déséquilibre est traduit sur la figure 5 par un courant circulant dans le neutre BT égal à 3 fois le courant homopolaire Io. En effet, ce courant homopolaire BT pourrait engendrer un courant homopolaire côté MT qui, traversant l'inductance de compensation 17, créerait une tension homopolaire indésirable. Pour éviter cet inconvénient, selon un autre mode de réalisation préférentiel, le transformateur 18 est muni d'enroulements tertiaires 22 dits enroulements de stabilisation qui sont connectés en triangle. De cette manière, le courant homopolaire BT Io sera compensé par un courant de circulation dans le triangle des enroulements de stabilisation 22 sans influencer les circuits MT.

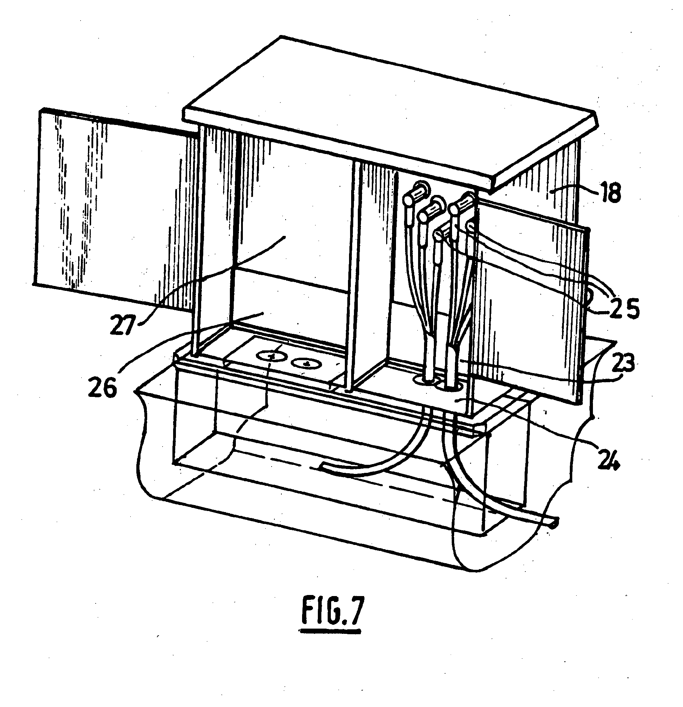

Un poste de transformation est généralement constitué d'une enveloppe, laquelle contient différents composants, dont les principaux sont un appareillage de raccordement et manoeuvre MT, un transformateur MT/BT, un tableau de répartition BT. Selon un mode de réalisation préférentiel, présenté sur les figures 6 et 7, le poste de transformation objet de l'invention ne comprend pas d'appareillage MT et est essentiellement constitué du transformateur, lequel comporte sur la plus grande face latérale de sa cuve 23 une première armoire 24 dans laquelle se trouvent les bornes de raccordement au réseau MT 25, et une seconde armoire 26 comprenant le tableau de répartition BT 27. On obtient ainsi un ensemble de grande compacité, de constitution totalement monolithique, d'un coût réduit par rapport à celui de postes conventionnels et permettant une mise en place très facile.

Le raccordement au réseau peut se faire selon un schéma en antenne, le transformateur comportant trois traversées MT 25. Mais il peut également se faire selon un schéma en passage ou encore appelé en coupure. Dans ce cas, le transformateur est équipé de six traversées MT 25 associées deux par deux.

Le raccordement direct du transformateur au réseau MT implique certaines dispositions contre les effets des défauts internes au transformateur. En effet, le réseau d'alimentation MT étant particulièrement intensif, un arc électrique apparaissant dans le bain d'huile du transformateur pourrait provoquer des effets thermiques et mécaniques se traduisant par des manifestations extérieures dangereuses pour le voisinage du poste. Il est donc prévu que le transformateur intègre un dispositif de protection et de coupure tel que décrit dans les brevets N°0817346 et 2084549 déposés par la demanderesse. Ce dispositif associe des fusibles de protection MT 28 munis de percuteurs 29, un dispositif de déconnection MT triphasé 30, et un dispositif de détection d'un courant de défaut à la terre 31. Pour intégrer l'inductance de compensation dans le dispositif de protection, la masse de celle-ci, constituée du blindage magnétique qui l'enveloppe, est isolée de la masse générale du poste et est reliée grâce à une liaison galvanique 32 avec la masse de la partie active du transformateur au dispositif de détection d'un courant de défaut à la terre 31. Par ailleurs, la caractéristique électrique des fusibles 28 est choisie de manière à ce que ceux-ci soient insensibles au courant qui les traversera lors des différents défauts entre phase et terre qui apparaîtront sur le réseau.

Enfin, un tel poste de transformation, tel que présenté sur la figure 7, peut être indifféremment équipé ou non d'une inductance de compensation 17, selon les nécessités du projet d'évolution du réseau. Quelle que soit la version, la cuve 23, les armoires 24 et 26, les équipements 25 et 27, le dispositif de protection et déconnexion interne constitué des fusibles 28, des percuteurs 29, du déconnecteur 30 et du dispositif de détection des courants de défaut à la terre 31 restent communs. Le transformateur 18 comporte alors des enroulements primaires MT 19 couplés en triangle, des enroulements secondaires BT 20 en étoile, et ne comporte pas d'enroulements de stabilisation 22.

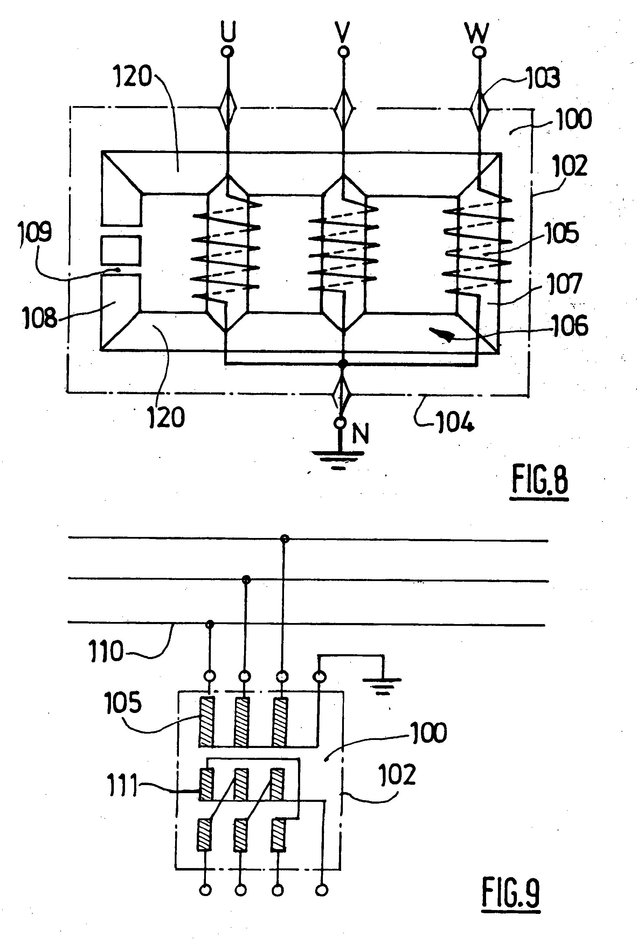

La figure 8 correspond à un schéma explicatif du principe d'un autre mode de réalisation de l'invention. Encore un autre mode de réalisation, optimisé, sera donné plus loin. Cette figure 8 représente schématiquement le transformateur 100, lequel est de type immergé dans un liquide diélectrique contenu dans une cuve 102. Le couplage des enroulements primaires 105 connectés au réseau MT 110 par l'intermédiaire des bornes 103 est un couplage étoile, le point neutre 104 étant destiné à être raccordé à la terre du poste.

Dans le présent mode de réalisation (de même d'ailleurs que dans les suivants), le circuit magnétique 6 du transformateur MT/BT est en forme d'échelle avec deux montants 120 et des barreaux 107, 108 généralement parallèles. Les montants 120 forment les culasses du transformateur tandis que les barreaux forment autant de noyaux magnétiques 107 que le circuit comporte de phases (ici 3) ainsi que des jambes supplémentaires pour le retour du flux homopolaire.

Les noyaux 107 recevant les enroulements MT 105 sont dimensionnés pour accepter sans phénomène de saturation une tension d'enroulement égale à la tension composée du réseau. En effet, lors d'un défaut franc entre phase et terre sur le réseau MT, les enroulements connectés entre le neutre et les phases saines voient une tension multipliée par le facteur $\sqrt{3}$.

Une jambe supplémentaire 108 disposée à l'opposé du noyau 107 d'extrémité, permet le rebouclage du flux homopolaire généré lorsqu'un défaut apparaît entre une phase du réseau MT 110 et la terre. Cette jambe 108 comprend des entrefers 109 répartis, permettant de maîtriser la reluctance du circuit parcouru par le flux homopolaire.

L'impédance homopolaire vue côté MT du transformateur est alors directement dépendante de cette reluctance et peut être ajustée en fonction des caractéristiques demandées.

Plusieurs avantages résultent d'une telle conception, comme le montre le schéma en figure 9 :

- La conception générale du poste est simplifiée, la fonction de compensation étant intégrée dans le transformateur 101, sans présence d'un composant supplémentaire dans la cuve 102 de l'appareil, tel un solénoïde.

- Le couplage des enroulements primaires 105 étant de type étoile, le couplage des enroulements secondaires 111 peut être de type zigzag, ce qui évite la présence d'un enroulement tertiaire de stabilisation destiné à compenser les courants homopolaires BT.

- L'absence d'un solénoïde supplémentaire connecté en série avec les enroulements primaires 105 réduit d'autant la résistance ohmique du circuit homopolaire, ce qui permet d'atteindre des facteurs de qualité élevés sans surdimensionnement des enroulements 105 du transformateur 101.

D'autres intérêts apparaissent également en vue de l'intégration de fonctions nouvelles dans le poste de transformation.

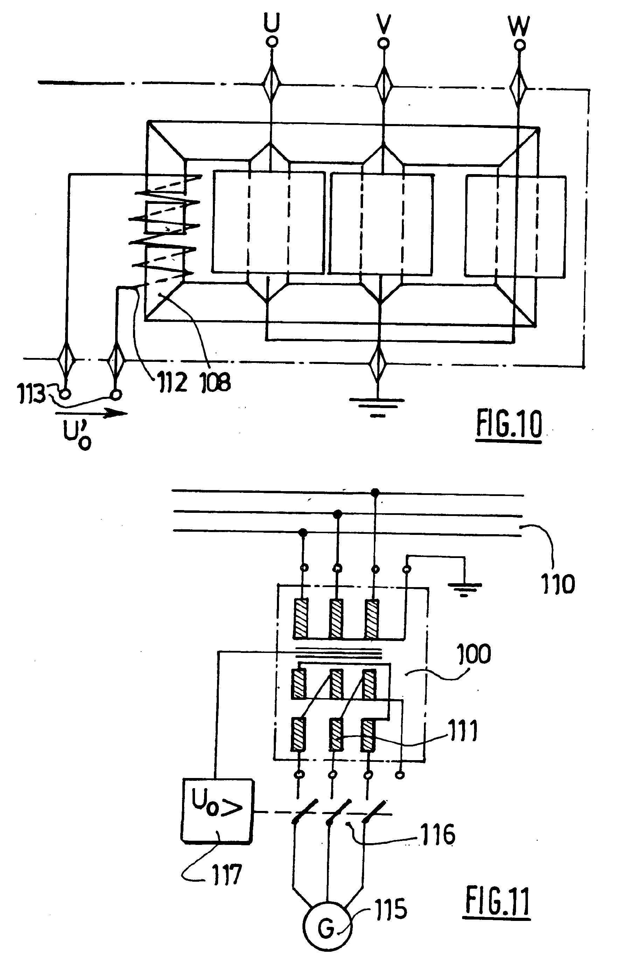

Comme le montre la figure 10, il est relativement aisé de positionner un enroulement de mesure 112 sur la quatrième jambe 108 comportant les entrefers 109. Cet enroulement génère une tension $u_o$' délivrée entre des bornes 113, dépendante du nombre de spires retenues, mais également directement proportionnelle à la tension homopolaire présente sur le réseau MT 110 lors d'un défaut entre une des phases et la terre. Cette information en tension peut être utile à plusieurs applications.

Il est tout d'abord possible d'intégrer dans le poste un détecteur de défaut directionnel qui, disposant de cette tension $u_o'$ ainsi que des courants des différentes phases du réseau, informe sur la situation du défaut apparu entre une des phases du réseau et la terre, soit en amont soit en aval du poste.

Un autre intérêt de cette information en tension apparaît lors d'opérations de réinjection de l'énergie électrique dans le réseau MT 110 depuis le poste de transformation, à partir d'un groupe électrogène par exemple. En effet, en situation de secours, correspondant à un isolement momentané de la portion de réseau MT de laquelle dépend le poste, il peut être intéressant d'assurer l'alimentation de cette portion de réseau et des autres postes qui y sont connectés par l'intermédiaire du poste intégrant le dispositif de compensation.

Dans une situation d'exploitation en réseau îloté, le régime de neutre du réseau MT 110 devient un régime de neutre isolé. Il devient nécessaire de substituer aux protections intervenant en exploitation courante et qui ne sont plus reliées au réseau îloté, une autre protection capable d'assurer la sécurité du personnel et des biens en cas de défaut entre une phase MT et la terre.

Comme le montre la figure 11, le groupe électrogène 115 est connecté aux enroulements BT 111 du transformateur 100 au travers d'un organe de coupure 116, qui peut être un disjoncteur, commandé par un relais de protection 117 à maximum de tension homopolaire. Ce relais homopolaire peut alors utiliser directement l'information en tension $u_o'$ sans nécessiter, comme c'est le cas dans un montage conventionnel, l'emploi de trois transformateurs de potentiel couplés en étoile.

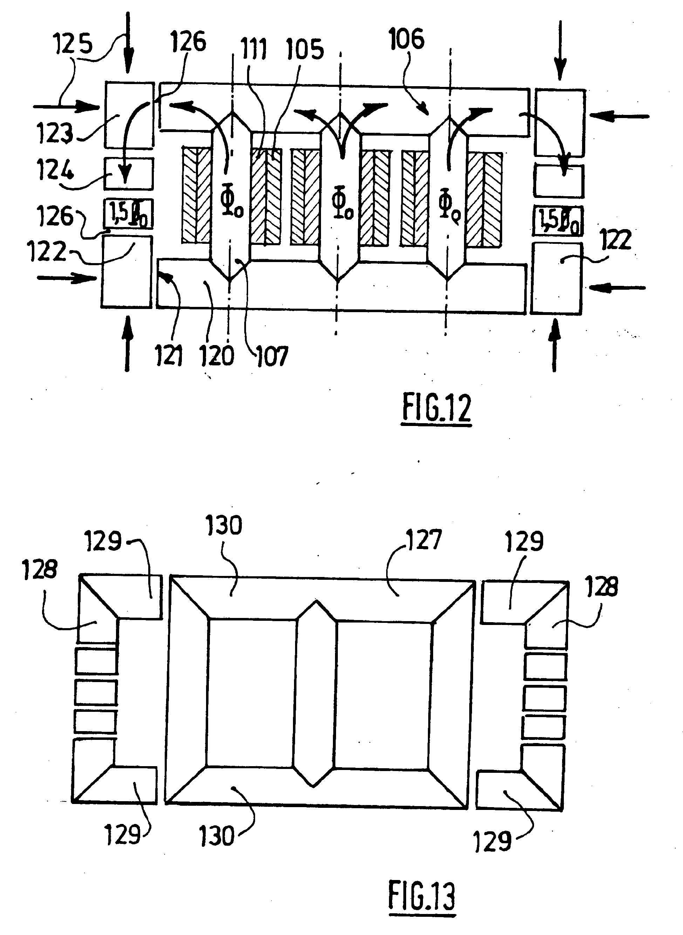

On décrit à présent un mode de réalisation optimisé du circuit magnétique en référence à la figure 12.

Le circuit magnétique 106 comprend ici les trois noyaux identiques 107, autour desquels sont positionnés les enroulements primaires 105 ainsi que les enroulements secondaires 111 du transformateur. Les culasses 120 qui reçoivent les noyaux 107 sont prolongées de part et d'autre et présentent des extrémités 121 avec une coupe à 90°.

Deux jambes de retour 122 permettant le rebouclage du flux homopolaire $\Phi_0$ sont disposées symétriquement et constituées de tronçons 123 et 124. Ces tronçons, réalisés tout comme les autres parties du circuit magnétique par un empilage de tôle magnétique, sont maintenus solidaires entre eux et positionnés contre les extrémités 122 des culasses 120 par des dispositifs de serrage 125 pouvant être obtenus à partir de tirants filetés. Ces dispositifs sont symbolisés ici par les actions mécaniques qu'ils exercent sur le circuit magnétique.

Les tronçons 123 ont une longueur au moins égale à la largeur des culasses 120. Les tronçons 124 ont une longueur dépendant du nombre d'entrefers 126 et de l'épaisseur de ces entrefers nécessaires à l'obtention d'une reluctance du circuit magnétique permettant d'atteindre l'impédance homopolaire désirée. Les entrefers 126 sont obtenus en insérant des plaques d'épaisseur définie en matériau amagnétique entre les extrémités des tronçons et peuvent être au besoin d'épaisseurs différentes. La section des tronçons 123 et 124 est au moins suffisante pour permettre le passage sans phénomène de saturation d'un flux égal à 1,5 fois le flux homopolaire $\Phi_0$ susceptible de passer dans chaque noyau 107.

D'autres modes de réalisation sont envisageables. À titre d'exemple, la figure 13 montre un principe grâce auquel on conserve un circuit magnétique principal 127 conventionnel, de géométrie couramment utilisée pour les transformateurs triphasés, auquel on vient ajouter de part et d'autre des jambes de retour 128, qui intègrent alors deux ailes 129 venant prolonger les culasses 130 du circuit principal 127.

Dans tous les cas, la conformation et le dimensionnement des entrefers 109 ou 126, ainsi que le choix du matériau est à la portée de l'homme de métier pour obtenir la reluctance souhaitée.

## Revendications

1.  Poste de transformation électrique MT/BT, comprenant un transformateur MT/BT (18), ledit poste comprenant un moyen (17) de compensation du courant capacitif homopolaire généré par une portion de réseau MT de longueur forfaitaire auquel ledit transformateur est susceptible d'être connecté, en cas d'un défaut entre une phase et la terre situé sur ce réseau, **caractérisé en ce que** les enroulements primaires (105) du transformateur sont couplés en étoile et le circuit magnétique (106) du transformateur comprend au moins une jambe de retour de flux (108) agencée pour canaliser le flux homopolaire, ladite jambe comprenant au moins un entrefer (109) pour ajuster la reluctance du circuit suivi par le flux homopolaire.

2.  Poste de transformation selon la revendication 1, dans lequel le transformateur MT/BT est un transformateur à bain d'huile.

3.  Poste de transformation selon revendication 1, comprenant un enroulement de mesure (112) constitué d'au moins une spire d'un conducteur enroulé sur ladite jambe de retour du circuit magnétique.

4.  Poste de transformation selon revendication 3, comprenant un organe de coupure BT (116) situé en aval des enroulements BT du transformateur, cet organe de coupure étant agencé pour être déclenché par un relais (117) à maximum de tension homopolaire intégré dans le poste et utilisant l'image de la tension homopolaire délivrée par ledit enroulement de mesure.

5.  Poste de transformation selon revendication 1, dans lequel le circuit magnétique comprend deux jambes de retour du flux homopolaire (122), disposées sensiblement symétriquement de part et d'autre des enroulements du transformateur.

6. Poste de transformation selon revendication 5, dans lequel les jambes de retour de flux sont constituées de tronçons (123, 124) en tôles magnétiques empilées appuyées sur les extrémités de culasses (120) reliant les extrémités des noyaux magnétiques (107) sur lesquels sont enroulés les enroulements primaires du transformateur.

7. Poste de transformation selon revendication 6, dans lequel des entrefers (126) sont aménagés entre les différents tronçons et entre les tronçons d'extrémité et les culasses du circuit magnétique, lesdits entrefers étant agencés de manière à obtenir la reluctance du circuit adaptée à l'impédance homopolaire souhaitée.

8. Poste de transformation selon revendication 1, dans lequel ledit transformateur comprend un circuit magnétique principal constitué de trois noyaux dont les extrémités sont reliées par deux culasses (130), et deux jambes de retour de flux (128) comportant des ailes (129) en prolongement des culasses du circuit magnétique principal.

9. Réseau électrique à moyenne tension, **caractérisé par le fait qu'**il comprend au moins un poste dé transformation selon l'une quelconque des revendications 1 à 8, et au moins un poste de transformation ne comprenant pas de moyen de compensation du courant capacitif homopolaire.

**Patentansprüche**

1. Elektrische MS/NS-Transformatorenstation, welche einen MS/NS-Transformator (18) umfasst, wobei die Station ein Mittel (17) zur Kompensation des gleichpoligen kapazitiven Stroms umfasst, der von einem MS-Netzabschnitt festgelegter Länge erzeugt wird, an den der Transformator angeschlossen werden kann, falls ein Fehler zwischen einer Phase und der Erde in diesem Netz vorliegt, **dadurch gekennzeichnet, dass** die Primärwicklungen (105) des Transformators in Sternschaltung geschaltet sind und der magnetische Kreis (106) des Transformators mindestens einen Rückschlussschenkel (108) umfasst, der dafür ausgelegt ist, den gleichpoligen Fluss zu kanalisieren, wobei der Schenkel mindestens einen Luftspalt (109) zum Anpassen der Reluktanz des Kreises umfasst, in dem der gleichpolige Fluss fließt.

2. Transformatorenstation nach Anspruch 1, wobei der MS/NS-Transformator ein Öltransformator ist.

3. Transformatorenstation nach Anspruch 1, welche eine Messwicklung (112) umfasst, die aus mindestens einer Windung eines Leiters besteht, der auf den Rückschlussschenkel des magnetischen Kreises gewickelt ist.

4. Transformatorenstation nach Anspruch 3, welche ein NS-Unterbrechungsorgan (116) umfasst, das den NS-Wicklungen des Transformators nachgeschaltet ist, wobei dieses Unterbrechungsorgan dafür ausgelegt ist, von einem Überspannungsrelais (117) für die gleichpolige Spannung ausgelöst zu werden, das in die Station integriert ist und das Bild der gleichpoligen Spannung verwendet, das von der Messwicklung geliefert wird.

5. Transformatorenstation nach Anspruch 1, wobei der magnetische Kreis zwei Rückschlussschenkel des gleichpoligen Flusses (122) umfasst, die im Wesentlichen symmetrisch beiderseits der Wicklungen des Transformators angeordnet sind.

6. Transformatorenstation nach Anspruch 5, wobei die Rückschlussschenkel aus Abschnitten (123, 124) aus gestapelten Magnetblechen bestehen, die sich auf die Jochenden (120) stützen, welche die Enden der Magnetkerne (107) verbinden, auf welche die Primärwicklungen des Transformators gewickelt sind.

7. Transformatorenstation nach Anspruch 6, wobei Luftspalte (126) zwischen den verschiedenen Abschnitten und zwischen den Endabschnitten und den Jochen des magnetischen Kreises angeordnet sind, wobei die Luftspalte derart angeordnet sind, dass die Reluktanz des Kreises erhalten wird, die an die gewünschte gleichpolige Impedanz angepasst ist.

8. Transformatorenstation nach Anspruch 1, wobei der Transformator einen magnetischen Hauptkreis umfasst, der aus drei Kernen besteht, deren Enden durch zwei Joche (130) verbunden sind, und zwei Rückschlussschenkel (128), welche Flügel (129) in Verlängerung der Joche des magnetischen Hauptkreises aufweisen.

9. Elektrisches Mittelspannungsnetz, **dadurch gekennzeichnet, dass** es mindestens eine Transformatorenstation nach einem der Ansprüche 1 bis 8 und mindestens eine Transformatorenstation, die kein Mittel zur Kompensation des gleichpoligen kapazitiven Stroms umfasst, enthält.

**Claims**

1. MV/LV transformer substation, comprising an MV/LV transformer (18), said substation comprising a means (17) for compensating for the homopolar capacitive current generated by an MV network portion of fixed length to which said transformer is likely to be connected, in the event of a fault between a phase and the earth on this network, **characterized in that** the primary windings (105) of the transformer are coupled in star configuration and the magnetic circuit (106) of the transformer comprises at least one flux feedback arm (108) designed to channel the homopolar flux, said arm comprising at least one air gap (109) to adjust the reluctance of the circuit taken by the homopolar flux.

2. Transformer substation according to Claim 1, wherein the MV/LV transformer is an oil bath transformer.

3. Transformer substation according to Claim 1, comprising a measurement winding (112) composed of at least one turn of a conductor wound around said feedback arm of the magnetic circuit.

4. Transformer substation according to Claim 3, comprising an LV disconnecting member (116) situated downstream of the LV windings of the transformer, said disconnecting member being designed to be triggered by a homopolar overvoltage relay (117) integrated into the substation and using the image of the homopolar voltage delivered by said measurement winding.

5. Transformer substation according to Claim 1, wherein the magnetic circuit comprises two homopolar flux feedback arms (122), arranged substantially symmetrically on either side of the windings of the transformer.

6. Transformer substation according to Claim 5, wherein the flux feedback arms are composed of stacked sections (123, 124) of magnetic sheet metal resting on the ends of yokes (120) linking the ends of the magnetic cores (107) on which are wound the primary windings of the transformer.

7. Transformer substation according to Claim 6, wherein air gaps (126) are arranged between the various sections and between the end sections and the yokes of the magnetic circuit, said air gaps being designed in such a way as to obtain the reluctance of the circuit that is suitable for the desired homopolar impedance.

8. Transformer substation according to Claim 1, wherein said transformer comprises a main magnetic circuit composed of three cores, the ends of which are linked by two yokes (130), and two flux feedback arms (128) having wings (129) extending from the yokes of the main magnetic circuit.

9. Medium voltage electrical network, **characterized in that** it comprises at least one transformer substation according to any one of Claims 1 to 8, and at least one transformer substation not comprising any means for compensating for the homopolar capacitive current.

**FIG.1**

**FIG.2**

**FIG.3**

**FIG.4**

FIG.5

FIG.6

FIG.7

FIG.8

FIG.9

14

FIG.10

FIG.11

FIG.12

FIG.13

## RÉFÉRENCES CITÉES DANS LA DESCRIPTION

**Documents brevets cités dans la description**

- WO 0817346 A

- WO 2084549 A